# EUROPEAN PATENT SPECIFICATION

(11) **EP 2 847 932 B1**
(45) Date of publication and mention of the grant of the patent: **01.04.2020**
(21) Application number: 13724465.3
(22) Date of filing: 07.05.2013
(51) Int. Cl.: H04L 12/18, H04L 12/58

(54) **METHOD, CLIENT AND SERVER OF TRANSMITTING GROUP COMMUNICATION INFORMATION**
VERFAHREN, CLIENT UND SERVER ZUR ÜBERTRAGUNG VON GRUPPENKOMMUNIKATIONSINFORMATIONEN
PROCÉDÉ, CLIENT ET SERVEUR POUR TRANSMETTRE DES INFORMATIONS DE COMMUNICATION DE GROUPE

(30) Priority: 08.05.2012 CN 201210143010
(43) Date of publication of application: 18.03.2015
(73) Proprietor: Alibaba Group Holding Limited, Grand Cayman (KY)
(72) Inventor: HE, Tong, Hangzhou 310013 (CN)
(74) Representative: Barker Brettell LLP
(86) International application number: PCT/US2013/039970
(87) International publication number: WO 2013/169795

(56) References cited:
- WO-A2-03/087992
- US-A1- 2009 003 344
- US-A1- 2010 250 693
- US-B1- 7 286 661

## Description

### Cross-Reference to Related Patent Applications

This application claims foreign priority to Chinese Patent Application No. 201210143010.1, filed on May 8, 2012, entitled "Method, Client and Server of Transmitting Group Communication Information".

### Technical field

The present disclosure relates to the field of Internet technology, and particularly relates to methods, IM clients, and IM group servers of transmitting communication information of an Instant Messenger (IM) group.

### Background

Instant Messenger (IM) tools provide people a way of conducting network-based interactions. A user can instantly exchange information such as text, voice or video with a number of persons using an IM client.

A group is a multiple-person communication mode provided by the IM tools. Users having a shared characteristic are gathered together to form a group, and the users in the group can freely conduct exchanges and communications within a group space. The group mode expands interaction boundaries of the users and enhances the convenience of interaction of IM users.

The IM group communication mode fulfills the demand for shared communications among group users who possess similar characteristics. However, when the group is relatively large (i.e., when the number of users in the group is relatively large), a demand for shared communications on a smaller scale could emerge for some of the users in the group due to some other characteristics. For example, in an IM class group, users in this class group include all students in a class, parents of each student, and a class teacher. The class teacher may need to conduct shared communications with all the parents or a few parents. Under an existing model of IM group communication, communication information within the group is known by each group member. As such, in this existing IM class group, information communicated from the class teacher to the few parents may be lost in a tremendous number of pieces of information within the group. This causes these few parents to easily overlook group information that is relevant to them. Apparently, under the existing model of IM group communication, sending or receiving of group communication information with designated recipients is not possible.

In addition, content of communication information within an IM group can be known by every member of the IM group in existing technologies. As such, confidential communication among a subset of the IM group members cannot be realized. For example, in e-commerce, a seller communicates with a buyer through an IM group, and sends a product discount message to the buyer using the IM group, for example. However, buyers at different levels might enjoy different discounts, and the seller does not want the buyers of different levels to be aware of each other's discount information. Under the existing model of IM group communication, identifying or distinguishing confidentiality of group communication information is not possible.

Apparently, in the existing technology, the model of IM group communication fails to perform sending or receiving of group communication information with designated recipients, and identifying or distinguishing confidentiality of group communication information.

US 2010/250693 A1 describes an apparatus and a method for converting a group message and to a group message exchanging system. The apparatus includes a parsing unit that obtains a group identifier of group communication information, a member information obtaining unit that obtains an address of at least one member of the group; and a converting unit that converts the group communication of IM into an email and/or vice versa. Conversion from IM to email can be carried out for the whole IM group (1st embodiment) or just for those users who are offline (2nd embodiment).

### Summary

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter. The term "techniques," for instance, may refer to device(s), system(s), method(s) and/or computer- readable instructions as permitted by the context above and throughout the present disclosure.

In light of the above, embodiments of the present disclosure provide a method of sending communication information of an IM group in order to address the failure of sending or receiving of group communication information with designated recipients, and to the failure of identifying or distinguishing confidentiality of group communication information in existing IM group communication models.

Correspondingly, the embodiments of the present disclosure further provide an IM client and an IM group server.

A technical scheme of the embodiments of the present disclosure is described as follows.

A method of transmitting Instant Messenger (IM) group communication information between a subset of a group of IM users, includes: an IM user initiating an IM named session by inputting group communication information, including a name identifier and IM group user identifiers for named session participants listed after the name identifier and that form the subset; an IM client receiving the group communication information inputted by a user; and in response to identifying that the group communication information includes a predefined name identifier, the IM client sending the group communication information to an IM client logged in with an IM group user identifier that is listed after the name identifier in the group communication information; wherein the IM group user identifiers includes a subset less than all of user identifiers associated with an IM group to which a user of the subset of users of the IM client belongs.

A method of transmitting IM group communication information between a subset of a group of IM users, includes: an IM group server receiving group communication information from an IM client; and in response to identifying that the group communication information includes a predefined name identifier and an offline transmission identifier, the IM group server sending the group communication information to an IM client logged in with a user identifier that is listed after the offline transmission identifier.

A method of transmitting Instant Messenger (IM) group communication information between a subset of a group of IM users, includes: an IM group server receiving group communication information from an IM client; and in response to identifying that the group communication information includes a predefined name identifier, the IM group server sending the group communication information to an IM client logged in with an IM group user identifier that is listed after the name identifier.

A method of transmitting Instant Messenger (IM) group communication information between a subset of a group of IM users, includes: an IM client receiving a first piece of group communication information via a network, including a name identifier and IM group user identifiers for named session participants listed after the name identifier and that form a subset less than all of user identifiers associated with an IM group to which a user of the subset of users of the IM client belongs; in response to identifying that the first piece of group communication information includes a predefined name identifier, the IM client prominently displaying the first piece of group communication information; receiving a second piece of group communication information that is inputted by a user for the first piece of group communication information; and sending the second piece of group communication information to IM clients of participants to which a named session in an IM group other than the user log in, where the named session participants include a user who sends the first piece of group communication information and a user indicated by a user identifier listed after the name identifier that is included in the first piece of group communication information.

A method of transmitting Instant Messenger (IM) group communication information between a subset of a group of IM users, includes: an IM client receiving a first piece of group communication information via a network; in response to identifying that the first piece of group communication information includes a predefined name identifier and that a user identifier that is listed after the name identifier includes a user identifier associated with a logged-in user, the IM client prominently displaying the first piece of group communication information; receiving a second piece of group communication information that is inputted by a user for the first piece of group communication information; including the name identifier and identifiers of named session participants other than the user in the second piece of group communication information, the named session participants including a user who sends the first piece of group communication information and a user indicated by the user identifier that is listed after the name identifier of the first piece of group communication information; and sending out the second piece of group communication information that includes the name identifier.

An Instant Messenger (IM) client includes: a receiving unit used for receiving group communication information inputted by a user; an identification unit used for identifying whether the group communication information received by the receiving unit includes a predefined name identifier; and a sending unit used for sending the group communication information to an IM client logged in with a user identifier that is listed after the name identifier in response to the identification unit identifying that the group communication information includes the predefined name identifier.

An Instant Messenger (IM) group server includes: a receiving unit used for receiving group communication information from an IM client from a user that initiated a named session, wherein the group communication information comprises a name identifier and IM group user identifiers for named session participants listed after the name identifier; an identification unit used for identifying whether the group communication information received by the receiving unit includes a predefined name identifier and an offline transmission identifier; and a sending unit used for sending the group communication information to an IM client logged in with a user identifier that is listed after the offline transmission identifier in response to the identification unit identifying that the group communication information includes the predefined name identifier and the offline transmission identifier; wherein the IM group user identifiers includes a subset less than all of user identifiers associated with an IM group to which a user of the subset of users of the IM client belongs.

An Instant Messenger (IM) group server includes: a receiving unit used for receiving group communication information from an IM client from a user that initiated a named session, wherein the group communication information comprises a name identifier and IM group user identifiers for named session participants listed after the name identifier; an identification unit used for identifying whether the group communication information received by the receiving unit includes a predefined name identifier; a sending unit used for sending the group communication information to an IM client logged in with an IM group user identifier that is listed after the name identifier in response to the identification unit identifying that the group communication information includes the predefined name identifier; wherein the IM group user identifiers includes a subset less than all of user identifiers associated with an IM group to which a user of the subset of users of the IM client belongs.

An Instant Messenger (IM) client includes: a first receiving unit used for receiving a first piece of group communication information via a network, including a name identifier and IM group user identifiers for named session participants listed after the name identifier and that form a subset less than all of user identifiers associated with an IM group to which a user of the subset of users of the IM client belongs; an identification unit used for identifying whether the first piece of group communication information received by the receiving unit includes a predefined name identifier; a display unit used for prominently displaying the first piece of group communication information in response to the identification unit identifying that the first piece of group communication information includes the predefined name identifier; a second receiving unit used for receiving a second piece of group communication information inputted by a user for the first piece of group communication information; a sending unit used for sending the second piece of group communication information received by the second receiving unit to IM clients of participants of a named session in an IM group other than the user, where the named session participants include a user who sends the first piece of group communication information and a user indicated by a user identifier listed after the name identifier of the first piece of group communication information that is identified by the identification unit.

An Instant Messenger (IM) client includes: a first receiving unit used for receiving a first piece of group communication information via a network, including a name identifier and IM group user identifiers for named session participants listed after the name identifier and that form a subset less than all of user identifiers associated with an IM group to which a user of the subset of users of the IM client belongs; an identification unit used for identifying whether the first piece of group communication information received by the receiver unit includes a predefined name identifier and whether a user identifier listed after the name identifier includes a user identifier of a logged-in user; a display unit used for prominently displaying the first piece of group communication information in response to the identification unit identifying that the first piece of group communication information includes the predefined name identifier and that the user identifier listed after the name identifier includes the user identifier of the logged-in user; a second receiving unit used for receiving the second piece of group communication information inputted by a user for the first piece of group communication information item; a setting unit used to include the name identifier and identifiers of named session participants other than the user in the second piece of group communication information received by the second receiving unit, where the named session participants include a user who sends the first piece of group communication information and the user indicated by the user identifier listed after the name identifier of the first piece of group communication information identified by the identification unit; and a sending unit used for sending the second piece of group communication information that includes the name identifier upon setting by the setting unit.

In the embodiments of the present disclosure, upon identifying that group communication information inputted by a user includes a predefined name identifier, an IM client at a sending end sends the group communication information to group users that are listed after the name identifier. In response to identifying that the received group communication information includes the name identifier, an IM client at a receiving end prominently displays the group communication information that includes the name identifier, and sends a user response of the group communication information to users (other than the user himself/herself) that are listed after the name identifier and a user who sends the group communication information. The IM clients can perform sending or receiving of group communication information with designated recipients, and can identifying confidentiality of group communication information.

Other characteristics and advantages of the present disclosure will be described in detail hereinafter, and will become clear in the specification or be understood through the embodiments of this disclosure. The goals and other advantages of the present disclosure can be achieved and obtained based on the specification, claims and specific structures that are indicated in attached figures.

### Description of Drawings

FIG. 1 is a work flow diagram illustrating a method of transmitting IM group communication information in accordance with the embodiments of the present disclosure.
FIG. 2 is a work flow diagram illustrating an example implementation of the method described in FIG. 1.
FIG. 3 is another work flow diagram illustrating a method of transmitting IM group communication information in accordance with the embodiments of the present disclosure.
FIG. 4 is another work flow diagram illustrating a method of transmitting IM group communication information in accordance with the embodiments of the present disclosure.
FIG. 5 is another work flow diagram illustrating a method of transmitting IM group communication information in accordance with the embodiments of the present disclosure.
FIG. 6 is another work flow diagram illustrating a method of transmitting IM group communication information in accordance with the embodiments of the present disclosure.
FIG. 7 is a work flow diagram illustrating an example implementation of the method described in FIG. 6.
FIG. 8 is another work flow diagram illustrating a method of transmitting IM group communication information in accordance with the embodiments of the present disclosure.
FIG. 9 is a structural diagram of an IM client in accordance with the embodiments of the present disclosure.
FIG. 10 is a structural diagram of an IM group server in accordance with the embodiments of the present disclosure.
FIG. 11 is another structural diagram of an IM group server in accordance with the embodiments of the present disclosure.
FIG. 12 is another structural diagram of an IM client in accordance with the embodiments of the present disclosure.
FIG. 13 is a structural diagram of an IM client in accordance with the embodiments of the present disclosure.
FIG. 14 is a structural diagram of the example IM client as described in FIGS. 9, 12 and 13.
FIG. 15 is a structural diagram of the example IM group server as described in FIGS. 10 and 11.

### Detailed Description

The embodiments of the present disclosure are described hereinafter in the conjunction with the accompanying figures. It should be understood that the embodiments described herein are merely used for describing and explaining the present disclosure and are not intended to impose limitations on the present disclosure.

In view of the failure of sending or receiving of group communication information with designated recipients, and the failure of identifying or distinguishing confidentiality of group communication information in existing IM group communication models, the embodiments of the present disclosure provide a technical scheme of transmitting IM group communication information in order to solve these problems.

Based on the technical scheme of the embodiments of the present disclosure, an independent shared communication among a subset of group users in an IM group can be achieved. An independent shared communication among a subset of group users in an IM group may be referred to as a "named session". Group communication information that includes a name identifier is referred to as "named session information". A user who initiates the named session and group users who are listed after the name identifier by the user who initiates the named session are referred to as "named session participants". In the technical scheme of the embodiments of the present disclosure, when an IM client at a sending end identifies that group communication information inputted by a user includes a name identifier, the IM client at the sending end sends the group communication information to group users who are listed after the name identifier. When an IM client at a receiving end identifies that the group communication information received thereby includes the name identifier, the IM client at the receiving end prominently displays the group communication information that includes the name identifier, and sends a user response of the group communication information to named session participants other than itself (i.e., the users who are listed after the name identifier and a user who initiates the group communication information), thus achieving an independent shared communication among a subset of group users in an IM group. As such, the IM clients can perform sending and/or receiving of group communication information with designated recipients, and can identify confidentiality of group communication information.

The embodiments of the present disclosure are described in detail below.

### First Embodiment

In the first embodiment, a speed of communication between clients in which participants of a named session are located is not bounded, and all the participants have logged onto an IM group server. The clients of the participants in the named session can establish Peer to Peer (P2P) communications, with an IM client in which a user who initiates the named session is located performs identified and directed transmission of named session information.

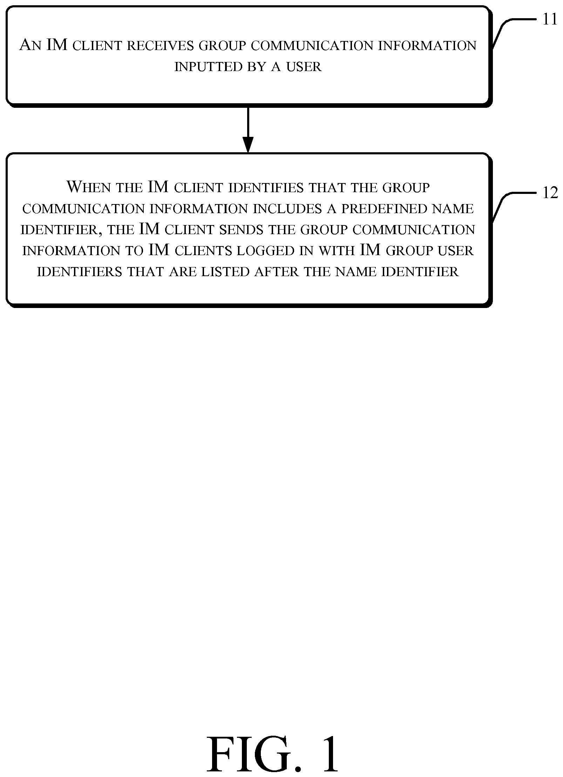

FIG. 1 is a work flow diagram illustrating a method of transmitting IM group communication information in accordance with the embodiments of the present disclosure. The method includes the following process:
Block 11: An IM client receives group communication information inputted by a user. In one embodiment, this group communication information is an IM group communication message.
Block 12: When the IM client identifies that the group communication information includes a predefined name identifier, the IM client sends the group communication information to IM clients logged in with IM group user identifiers that are listed after the name identifier.

Based on the above process, in response to identifying that group communication information inputted by a user includes a predefined name identifier, an IM client at a sending end sends the group communication information to IM clients to which group users who are listed after the name identifier log in. Group communication information that is targeted by a user at a subset of users in an IM group can be sent to such subset of the users, thus achieving a transmission of IM group communication information to designated recipients. In addition, the IM client can identify confidentiality of group communication information by identifying the name identifier.

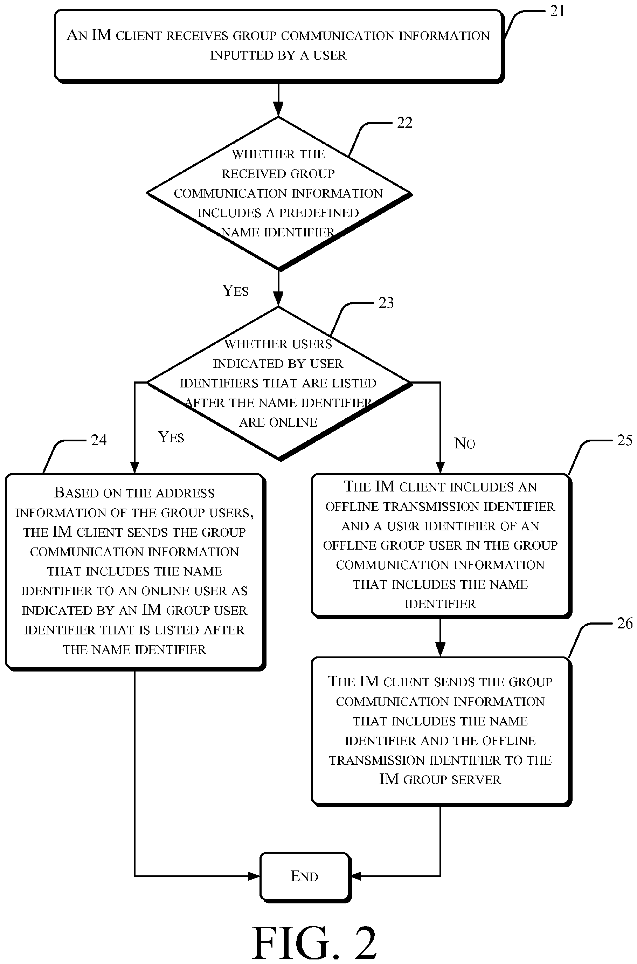

FIG. 2 is a work flow diagram illustrating a specific implementation of the method shown in FIG. 1. The process of this specific implementation includes the following process:
Block 21: An IM client receives group communication information inputted by a user.
Block 22: The IM client determines whether the received group communication information includes a predefined name identifier. In the event that the predefined name identifier is included, the process goes to block 23. Otherwise, a normal process of group communication (which corresponds to an existing technology, and is not redundantly described herein) is performed.
Block 23: Based on address information (address information may include users' IP address information and protocol port information, etc.) of group users within a group to which the user belongs that is obtained when logging onto an IM group server, the IM client determines whether users indicated by user identifiers that are listed after the name identifier are online. For an online user, the process goes to block 24. For an offline user, the process goes to block 25.
Block 24: Based on the address information of the group users, the IM client sends the group communication information that includes the name identifier to an online user as indicated by an IM group user identifier that is listed after the name identifier. The process is ended.
Block 25: The IM client includes an offline transmission identifier and a user identifier of an offline group user in the group communication information that includes the name identifier.
Block 26: The IM client sends the group communication information that includes the name identifier and the offline transmission identifier to the IM group server.

Using the process in FIG. 2 and based on the method shown in FIG. 1, upon establishing P2P communications with other users of an IM group, an IM client may directly send group communication information that includes a name identifier to participants of a named session other than a user who initiates the named session, and therefore can conduct point-to-point communications with the participants of the named session, thus conducting a fast and efficient named session. If a user among the named session participants is offline, an offline transmission identifier and a user identifier of the offline user may further be included in the group communication information that includes the name identifier so that the IM group server can send the group communication information that includes the name identifier to the offline user after the offline user logs in, thus ensuring an effective transmission of the named session information.

In addition, in response to determining that the received group communication information includes a predefined name identifier, the IM client further prominently displays the group communication information that includes the name identifier in order to enable the user to effectively identify the group communication information that is relevant to him/her.

A process of prominent display includes the following methods and any other methods that prominently display named session information.
First method: An IM client establishes a separate named session sub-window in a group session window and displays group communication information that includes a name identifier in the named session sub-window.
Second method: Based on pre-set emphasis information, an IM client emphatically displays group communication information that includes a name identifier in a communication information display region of a group session window, e.g., using a highlighted font, a colorful font or a flashing font to display the group communication information that includes the name identifier.
Third method: An IM client displays group communication information received thereby at the top of a communication information display region.

The process of prominent display can give a visual reminder to a user, reminding the user of named session information that is relevant to him/her.

### Second Embodiment

Corresponding to the first embodiment, the second embodiment allows an IM group server to store and relay named session information when named session participants include a user who is offline.

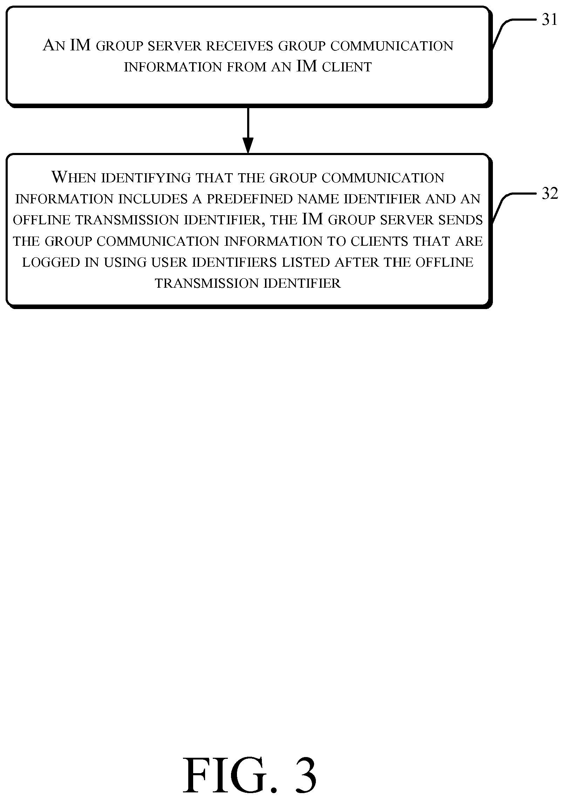

FIG. 3 is a work flow diagram illustrating a method of transmitting IM group communication information in accordance with the embodiments of the present disclosure. As shown in FIG. 3, a process performed by an IM group server to relay named session information includes:
Block 31: An IM group server receives group communication information from an IM client.
Block 32: When identifying that the group communication information includes a predefined name identifier and an offline transmission identifier, the IM group server sends the group communication information to clients that are logged in using user identifiers listed after the offline transmission identifier. Specifically, the IM group server stores the group communication information, and after a user who is listed after the offline transmission identifier logs into the IM group server, sends the stored group communication information to an IM client of the logged-in user.

Using the above process, an effective transmission of named session information is guaranteed when named session participants include a user who is offline.

### Third Embodiment

In the third embodiment, a P2P communication between IM clients of named session participants is difficult to be established due to factors such as a limited network speed or a firewall restriction. In this case, an IM group server may act as a proxy and relay named session information between the named session participants.

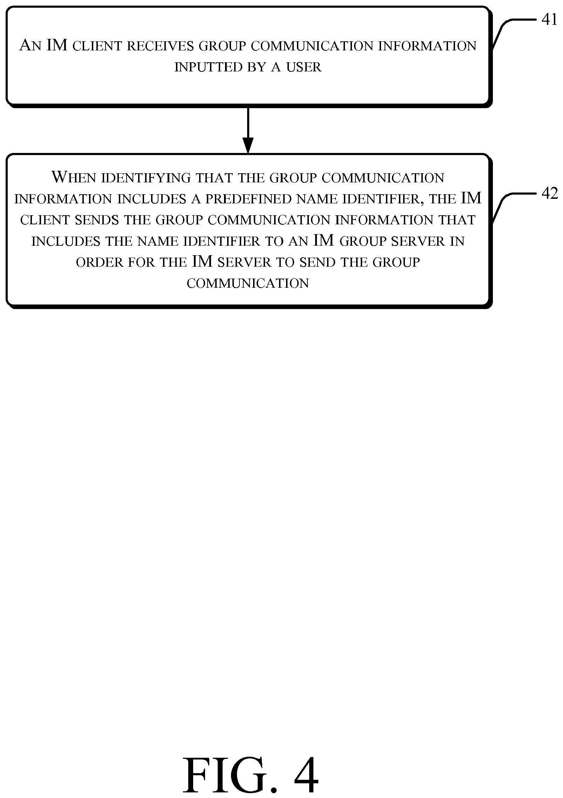

FIG. 4 is a work flow diagram illustrating a method of transmitting IM group communication information in accordance with the embodiments of the present disclosure. As shown in FIG. 4, a process performed by an IM client for named session information includes the following blocks:
Block 41: An IM client receives group communication information inputted by a user.
Block 42: When identifying that the group communication information includes a predefined name identifier, the IM client sends the group communication information that includes the name identifier to an IM group server in order for the IM server to send the group communication information to IM clients that are logged in using IM group user identifiers listed after the name identifier based on the name identifier in the group communication information.

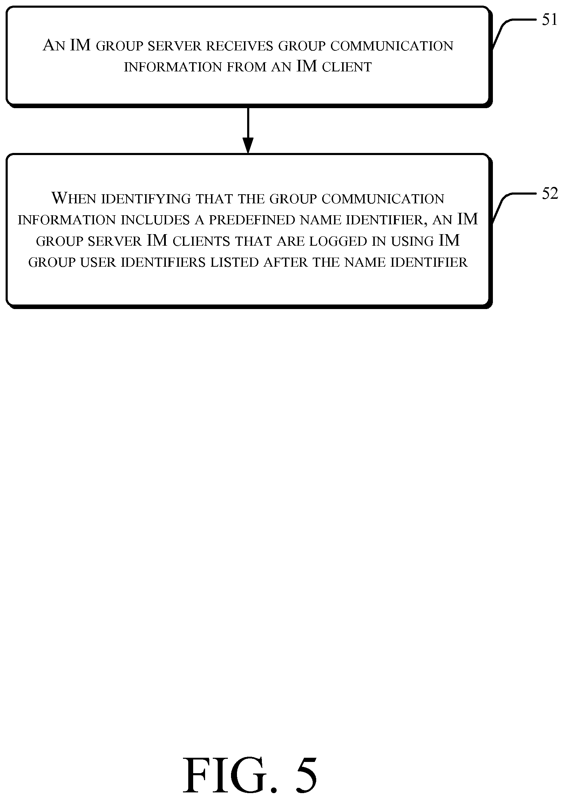

FIG. 5 is a work flow diagram illustrating a method of transmitting IM group communication information in accordance with the embodiments of the present disclosure. As shown in FIG. 5, a process performed by an IM group server for named session information includes the following blocks:
Block 51: An IM group server receives group communication information from an IM client.
Block 52: When identifying that the group communication information includes a predefined name identifier, an IM group server IM clients that are logged in using IM group user identifiers listed after the name identifier. Specifically, a process performed by the IM group server when there exists a user of named session participants being offline can be referenced to the block 32 that has been described above, and is not redundantly described herein.

Based on the processes shown in FIG. 4 and FIG. 5, when a P2P communication between IM clients of named session participants is difficult to established due to factors such as a limited network speed or a firewall restriction, the IM group server acts as a proxy and relays named session information between the named session participants to ensure a realization of a named session.

Based on the above first to third embodiments, an IM client that initiates a named session identifies named session information and sends the named session information to IM clients to which other named session participants log in, thus achieving a directed transmission of group communication information to designated recipients from a sending end of the named session information and identifying confidentiality of the group communication information.

### Fourth Embodiment

In the fourth embodiment, an IM client that acts as a receiving end identifies whether group communication information received thereby is named session information. The named session information may be sent using a process as described in any one of the first to third embodiments. Specifically, named session information may be directed to IM clients of participants of a named session from an IM client that initiates the named session, or directed to the IM clients of the named session participants by an IM group server after identifying that the group communication information is the named session information.

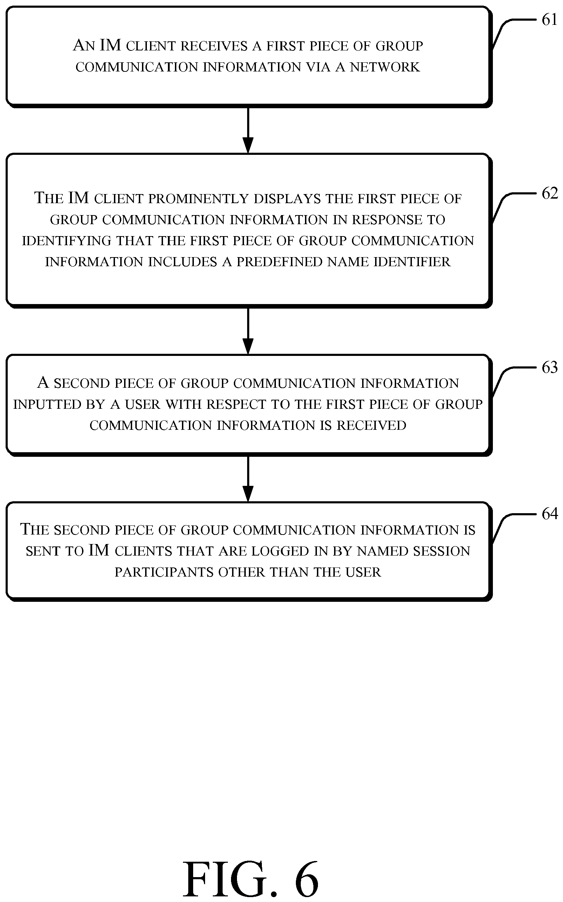

FIG. 6 is a work flow diagram illustrating a method of transmitting IM group communication information in accordance with the embodiments the present disclosure. As shown in FIG. 6, the method includes the following blocks:
Block 61: An IM client receives a first piece of group communication information via a network.
Block 62: The IM client prominently displays the first piece of group communication information in response to identifying that the first piece of group communication information includes a predefined name identifier.
Block 63: A second piece of group communication information inputted by a user with respect to the first piece of group communication information is received.
Block 64: The second piece of group communication information is sent to IM clients that are logged in by named session participants other than the user, where the named session participants include a user who sends the first piece of group communication information and a user indicated by a user identifier listed after the name identifier in the first piece of group communication information.

Using the process as shown in FIG. 6, an IM client that acts as a receiving end of named session information prominently displays the received named session information (i.e., a first piece of group communication information), receives a named session information response (i.e., a second piece of group communication information) from a user for the received named session information, and sends this named session information response to named session participants, thus achieving receiving and sending of group communication information with designated recipients and identifying confidentiality of the group communication information.

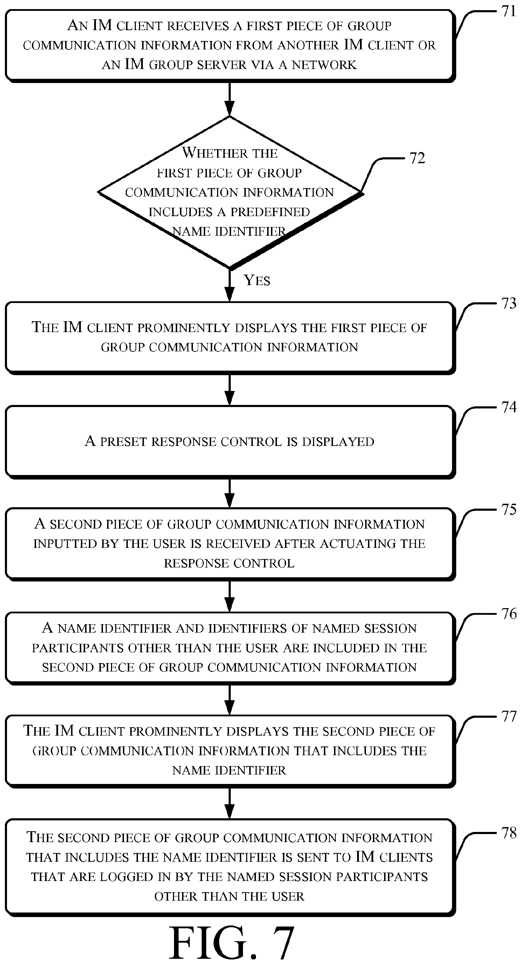

FIG. 7 is a work flow diagram illustrating a specific implementation of the method shown in FIG. 6. A process of this specific implementation includes the following blocks:
Block 71: An IM client receives a first piece of group communication information from another IM client or an IM group server via a network.
Block 72: The IM client identifies whether the first piece of group communication information includes a predefined name identifier. If the name identifier is included, the process goes to block 73. Otherwise, a normal process of group communication (which is an existing technology) is performed, and is not redundantly described herein.
Block 73: The IM client prominently displays the first piece of group communication information. Details of prominent display may be referenced to the prominent display processes of the first embodiment described above, and are not redundantly described herein.
Block 74: A preset response control is displayed. Specifically, this response control may be displayed at a position after the first piece of group communication information, thus allowing a user to easily identify and actuate the response control, or may be located in other positions of a display interface of the IM client.
Block 75: A second piece of group communication information inputted by the user is received after actuating the response control.
Block 76: A name identifier and identifiers of named session participants other than the user are included in the second piece of group communication information.
Block 77: The IM client prominently displays the second piece of group communication information that includes the name identifier. Details of prominent display may be referenced to the prominent display processes of the first embodiment described above, and are not redundantly described herein.
Block 78: The second piece of group communication information that includes the name identifier is sent to IM clients that are logged in by the named session participants other than the user. Details of a transmission process may be referenced to the process described at block 22 - block 26 of the first embodiment above, and are not redundantly described herein.

Through the above process and based on the processing method shown in FIG. 6, an IM client that acts as a receiving end of a named session provides an interface (i.e., a response control) to a user for responding named session information, and sends a user response associated with the named session to other named session participants, thus achieving receiving and sending of group communication information with designated recipients and identifying confidentiality of the group communication information.

The above first to fourth embodiments describe processing scenarios of identifying named session information and conducting a directed transmission of the named session information (i.e., sending only to IM clients of users who are listed after a named session identifier) by a sending end of the named session information. Using the abovementioned process, receiving or sending of group communication information with designated recipients, and identifying or distinguishing confidentiality of the group communication information can be achieved in an IM client that acts as a sending end.

### Fifth Embodiment

In the fifth embodiment, an IM client (which acts as a sending end of a named session or an IM group server) directly sends out group communication information without differentiating whether the group communication information is named session information. Only an IM client (which acts as a receiving end) determines whether the group communication information is named conversation information, thus reducing a processing load on the sending end.

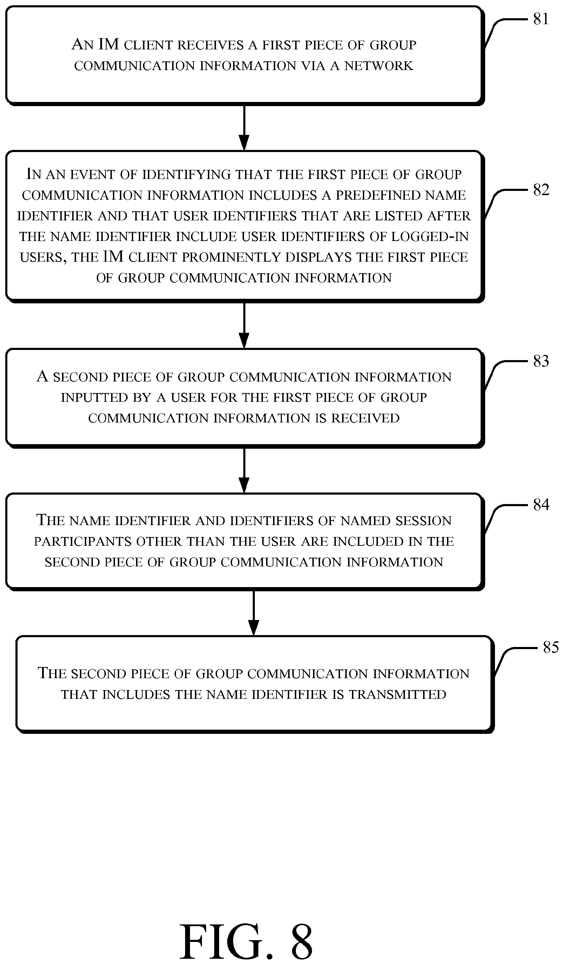

FIG. 8 is a work flow diagram illustrating a method of transmitting IM group communication information in accordance with the embodiments of the present disclosure. As shown in FIG. 8, the method includes the following blocks:
Block 81: An IM client receives a first piece of group communication information via a network.
Block 82: In an event of identifying that the first piece of group communication information includes a predefined name identifier and that user identifiers that are listed after the name identifier include user identifiers of logged-in users, the IM client prominently displays the first piece of group communication information.
Block 83: A second piece of group communication information inputted by a user for the first piece of group communication information is received.
Block 84: The name identifier and identifiers of named session participants other than the user are included in the second piece of group communication information, where the named session participants include a user who initiates the first piece of group communication information and a user indicated by a user identifier listed after the name identifier of the first piece of group communication information.
Block 85: The second piece of group communication information that includes the name identifier is transmitted.

More specifically, upon completion of block 82, the IM client displays a preset response control, and the user inputs the second piece of group communication after actuating this response control.

Based on the method shown in FIG. 8, when an IM client that acts as a receiving end of named session information determines that group communication information (i.e., a first piece of group communication information) received thereby is the named session information and is designated for sending to a user who logs into the IM client, the IM client prominently displays the received named session information, receives a named session information response (i.e., a second piece of group communication information) from the user for the received named session information, and transmits the named session information response to named session participants, thus achieving receiving of group communication information by designated recipients and identification of confidentiality of group communication information.

The exemplary methods of sending IM group communication information can be implemented using hardware or software.

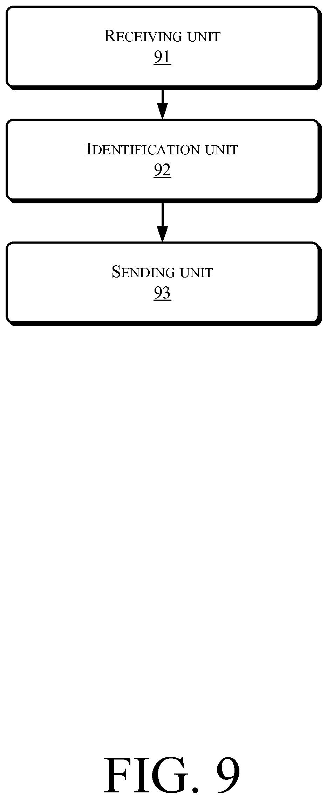

Corresponding to the method shown in FIG. 1 that is associated with the first embodiment, FIG. 9 shows a structural diagram of an IM client in accordance with the embodiments of the present disclosure. As shown in FIG. 9, the IM client includes:
a receiving unit 91, used for receiving group communication information inputted by a user;
an identification unit 92, which is connected to the receiving unit 91, used for identifying whether the group communication information received by the receiving unit 91 includes a predefined name identifier; and
a sending unit 93, which is connected to the identification unit 92, used for sending the group communication information to an IM client that is logged in using an IM group user identifier that is listed after the name identifier in response to the identification unit 92 identifying that the group communication information includes the predefined name identifier.

Using the IM client shown in FIG. 9, group communication information that is targeted at a subset of users in an IM group by a user can be transmitted to that subset of users, thus achieving sending of group communication information to designated recipients. Furthermore, the IM client can identify confidentiality of group communication information by identifying a name identifier.

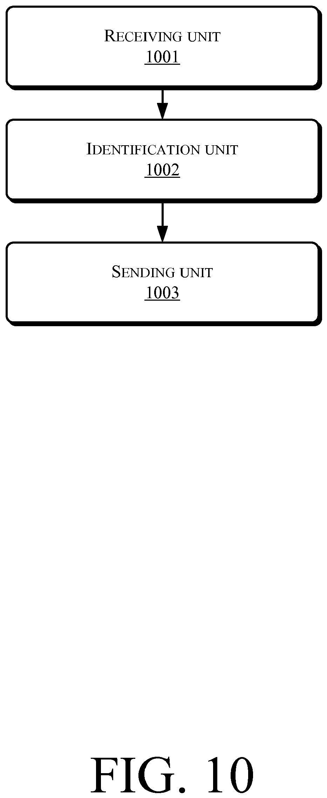

Corresponding to the method shown in FIG. 3 that is associated with the second embodiment, FIG. 10 shows a structural diagram of an IM group server in accordance with the embodiments of the present disclosure. As shown in FIG. 10, the IM group server includes:
a receiving unit 1001, used for receiving group communication information from an IM client;
an identification unit 1002, which is connected to the receiving unit 1001, used for identifying whether the group communication information received by the receiving unit 1001 includes a predefined name identifier and an offline transmission identifier; and
a sending unit 1003, which is connected to the identification unit 1002, used for sending the group communication information to IM clients which are logged in by user identifiers that are listed after the offline transmission identifier in response to the identification unit 1002 identifying that the group communication information includes the predefined name identifier and the offline transmission identifier.

Using the IM group server shown in FIG. 10, if a user of named session participants is offline, group communication information that is sent by an IM client can be transmitted to the user after logging in from offline, thus ensuring an effective transmission of named session information.

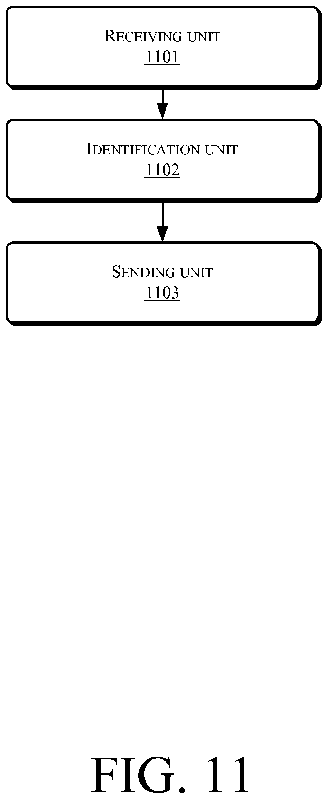

Corresponding to the method shown in FIG. 5 that is associated with the third embodiment, FIG. 11 shows a structural diagram of an IM group server in accordance with the embodiments of the present disclosure. As shown in FIG. 11, the IM group server includes:
a receiving unit 1101, used for receiving group communication information from an IM client;
an identification unit 1102, which is connected to the receiving unit 1101, used for identifying whether the group communication information received by the receiving unit 1101 includes a predefined name identifier; and
a sending unit 1103, which is connected to the identification unit 1102, used for transmitting the group communication information to IM clients which are logged in by IM group user identifiers listed after the name identifier in response to the identification unit 1102 identifying that the group communication information includes the predefined name identifier.

Using the IM group server shown in FIG. 11, in an event that a P2P communication between IM clients of named session participants cannot be established due to factors such as a limited network speed or firewall restriction, the IM group server acts as a proxy and relays named session information between named session participants to ensure implementation of a named session.

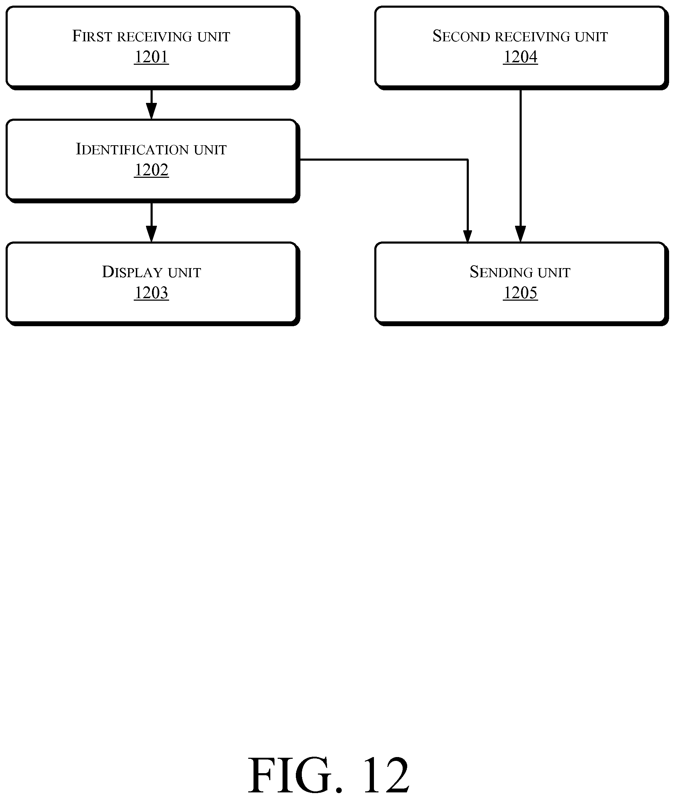

Corresponding to the method shown in FIG. 6 that is associated with the fourth embodiment, FIG. 12 shows a structural diagram of an IM client in accordance with the embodiments of the present disclosure. As shown in FIG. 12, the IM client includes:
a first receiving unit 1201, used for receiving a first piece of group communication information via a network;
an identification unit 1202, which is connected to the first receiving unit 1201, used for identifying whether the first piece of group communication information received by the first receiving unit 1201 includes a predefined name identifier;
a display unit 1203, which is connected to the identification unit 1202, used for prominently displaying the first piece of group communication information in response to the identification unit 1202 identifying that the first piece of group communication information includes the predefined name identifier;
a second receiving unit 1204, used for receiving a second piece of group communication information inputted by a user for the first piece of group communication information; and
a sending unit 1205, which is connected to the second receiving unit 1204 and the identification unit 1202, used for sending the second piece of group communication information received by the second receiving unit 1204 to IM clients that are logged in by name session participants other than the user, where the named session participants include a user who sends the first piece of group communication information and a user indicated by a user identifier listed after the name identifier of the first piece of group communication information that is identified by the identification unit 1202.

Using the IM client shown in FIG. 12, an IM client that acts as a receiving end of named session information prominently displays the received named session information (i.e., a first piece of group communication information), receives a named conversation information response (i.e., a second piece of group communication information) sent by a user for the received named session information, and transmits the named session information response to named conversation participants, thus achieving receiving and sending of group communication information with designated recipients and identification of confidentiality of group communication information.

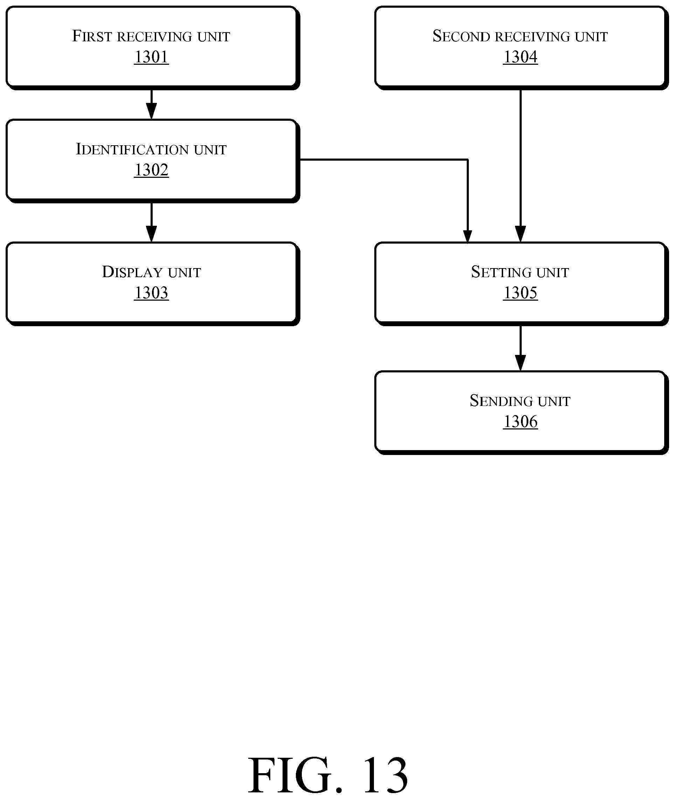

Corresponding to the method shown in FIG. 8 that is associated with the fourth embodiment, FIG. 13 shows a structural diagram of an IM client in accordance with the embodiments of the present disclosure. As shown in FIG. 13, the IM client includes:
a first receiving unit 1301, used for receiving a first piece of group communication information via a network;
an identification unit 1302, which is connected to the first receiver unit 1301, used for identifying whether the first piece of group communication information received by the first receiving unit 1301 includes a predefined name identifier and whether user identifiers listed after the name identifiers include user identifiers of logged-in users;
a display unit 1303, which is connected to the identification unit 1302, used for prominently displaying the first piece of group communication information when the identification unit 1302 identifying that the first piece of group communication information includes the predefined name identifier and the user identifiers listed after the name identifier include the user identifiers of the logged-in users;
a second receiving unit 1304, used for receiving a second piece of group communication information inputted by a user for the first piece of group communication information;
a setting unit 1305, which is connected to the second receiving unit 1304 and the identification unit 1302, used for including the name identifier and identifiers of named session participants other than the user in the second piece of group communication information received by the second receiving unit 1304, where the named session participants include a user who sends the first piece of group communication information and users indicated by the user identifiers listed after the name identifiers of the first piece of group communication information identified by the identification unit 1202; and
a sending unit 1306, which is connected to the setting unit 1305, used for sending the second piece of group communication information item that includes the name identifier after being set by the setting unit 1305.

Using the IM client shown in FIG. 13, an IM client that acts as a receiving end of named session information prominently displays received named conversation information when determining that received group communication information (i.e., a first piece of group communication information) is named session information and is designated for transmission to a user logged onto the IM client, receives a named session information response (i.e., a second piece of group communication information) from a user for the received named session information, and transmits the named session information response to named conversation participants, thus achieving receiving of group communication information by designated recipients and identification of confidentiality of group communication information.

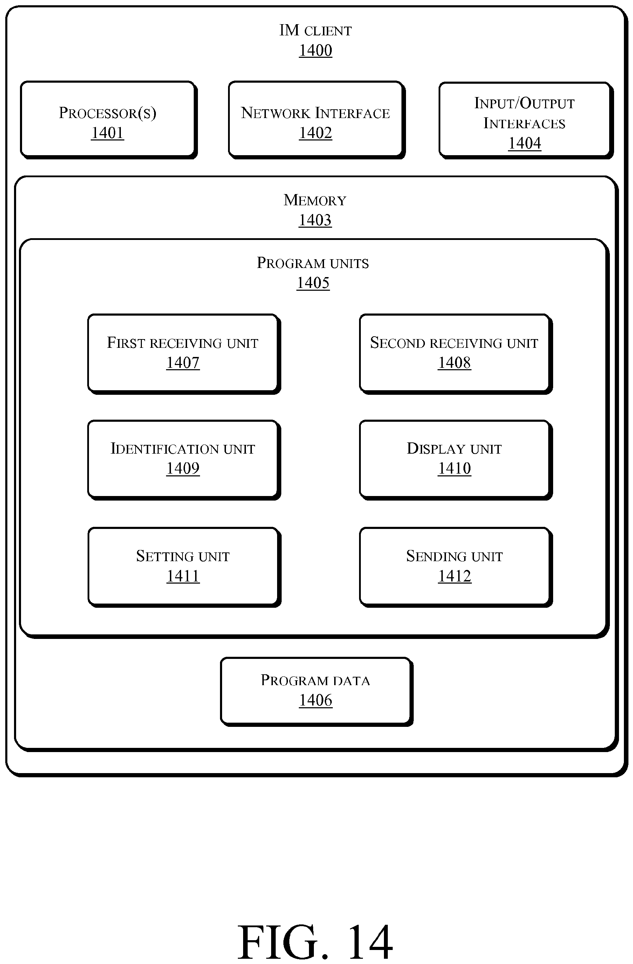

FIG. 14 illustrates an example IM client 1400, such as the IM client as described above, in more detail. In one embodiment, the IM client 1400 can include, but is not limited to, one or more processors 1401, a network interface 1402, memory 1403, and an input/output interface 1404.

The memory 1403 may include computer-readable media in the form of volatile memory, such as random-access memory (RAM) and/or non-volatile memory, such as read only memory (ROM) or flash RAM. The memory 1403 is an example of computer-readable media.

Computer-readable media includes volatile and non-volatile, removable and non-removable media implemented in any method or technology for storage of information such as computer readable instructions, data structures, program modules, or other data. Examples of computer storage media includes, but is not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that can be used to store information for access by a computing device. As defined herein, computer-readable media does not include transitory media such as modulated data signals and carrier waves.

The memory 1403 may include program units 1405 and program data 1406. In one embodiment, the program units 1405 may include a first receiving unit 1407, a second receiving unit 1408, an identification unit 1409, a display unit 1410, a setting unit 1411 and a sending unit 1412. Details about these program units thereof may be found in the foregoing embodiments described above.

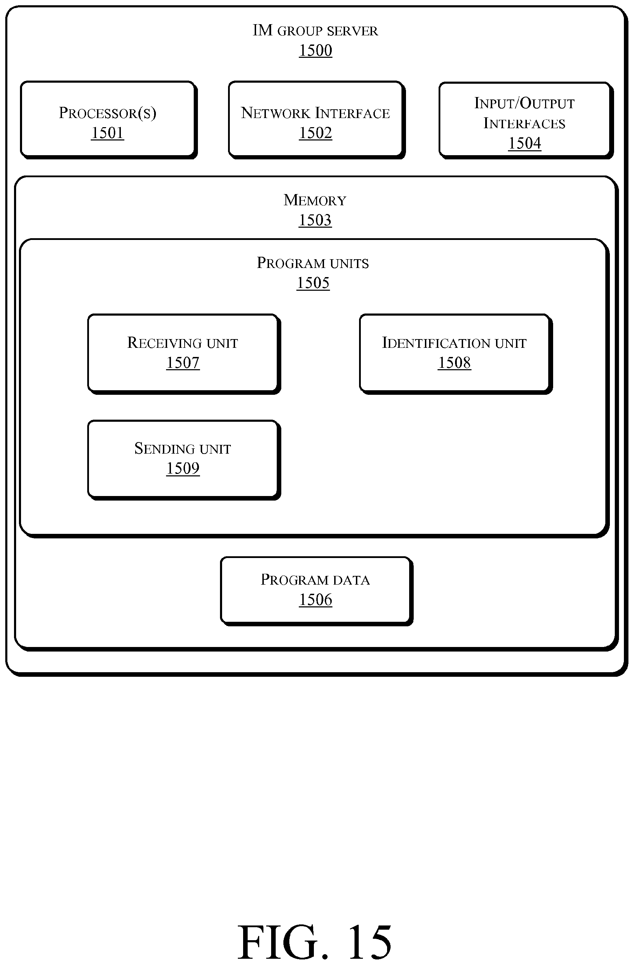

FIG. 15 illustrates an example IM group server 1500, such as the IM group server as described above, in more detail. In one embodiment, the IM group server 1500 can include, but is not limited to, one or more processors 1501 , a network interface 1502, memory 1503, and an input/output interface 1504. The memory 1503 is an example of computer-readable media.

The memory 1503 may include program units 1505 and program data 1506. In one embodiment, the program units 1505 may include a receiving unit 1507, an identification unit 1508 and a sending unit 1509. Details about these program units thereof may be found in the foregoing embodiments described above.

In short, based on the technical scheme of the embodiments of the present disclosure, upon identifying that group communication information inputted by a user includes a predefined name identifier, an IM client on a sending end sends the group communication information to group users that are listed after the name identifier. In response to identifying that the received group communication information includes the name identifier, an IM client at a receiving end prominently displays the group communication information that includes the name identifier, and sends a user response of the group communication information to users (other than the user himself/herself) that are listed after the name identifier and a user who sends the group communication information. The IM clients can perform sending or receiving of group communication information with designated recipients, and can identify or distinguish confidentiality of group communication information.

A technical person skilled in the art may make changes and modifications of the present disclosure without departing from the scope of the claims.

## Claims

1. A method of transmitting Instant Messenger (IM) group communication information between a subset of a group of IM users, the method comprising:
an IM user initiating an IM named session by inputting group communication information, including a name identifier and IM group user identifiers for named session participants listed after the name identifier and that form the subset;
an IM client receiving (11) the group communication information; and
in response to identifying that the group communication information includes a predefined name identifier, the IM client sending (12) the group communication information to IM clients which are logged in with IM group user identifiers listed after the name identifier in the group communication information; wherein the IM group user identifiers are a subset less than all of user identifiers associated with an IM group to which a user of the subset of users of the IM client belongs.

2. A method according to claim 1, wherein sending (12) the group communication information to the IM clients which are logged in with the IM group user identifiers listed after the name identifier, comprises:
based on address information, which is obtained from an IM group server which the IM client logged onto, of group users of a group to which a user of the IM client belongs, sending (24) the group communication information to the IM clients which are logged in with the IM group user identifiers listed after the name identifier.

3. A method according to claim 1, wherein sending (12) the group communication information to the IM clients which are logged in with the IM group user identifiers listed after the name identifier, comprises:
sending (42) the group communication information to an IM group server so that the IM group server sends the group communication information to the IM clients which are logged in with the IM group user identifiers listed after the name identifier based on the name identifier in the group communication information.

4. A method according to any preceding claim, further comprising:
the IM client prominently displaying (62) the group communication information.

5. A method according to any preceding claim, further comprising:
receiving (63) a response of the group communication information from a user indicated by a user identifier listed after the name identifier of the group communication information.

6. An instant messenger (IM) client comprising:
one or more processors (1401);
memory (1403) storing executable instructions that, when executed by the one or more processors (1401), cause the one or more processors to perform acts comprising:
receiving (71) a first piece of group communication information, including a name identifier and IM group user identifiers for named session participants listed after the name identifier and that form a subset less than all of user identifiers associated with an IM group to which a user of the subset of users of the IM client belongs;
identifying (72) that the first piece of group communication information includes a predefined name identifier;
receiving (75) a second piece of group communication information inputted by a user for the first piece of group communication information; and
sending (78) the second piece of group communication information to IM clients of participants of a named session in an IM group other than the user, wherein the named session participants include a user who sends the first piece of group communication information and a user indicated by a user identifier listed after the name identifier of the first piece of group communication information.

7. An IM client according to claim 6, wherein, after prominently displaying (73) the first piece of group communication information, the acts further comprises displaying (74) a preset response control, wherein
receiving the second piece of group communication information comprises: receiving (75) the second piece of group communication information inputted by the user after actuating the response control, and
sending (78) the second piece of group communication information comprises:
including (76) the name identifier tag and identifiers of the named sessions participants other than the user in the second piece of group communication information; and
sending (78) the second piece of group communication information that includes the name identifier to the IM clients that are logged in by the named session participants other than the user.

8. An IM client according to claim 7, wherein sending (78) the second piece of group communication information that includes the name identifier to the IM clients that are logged in by the named session participants other than the user, comprises:
based on address information, which is obtained from an IM group server which the IM client logged onto, of group users of a group to which the user belongs, sending (24) the group communication information including the name identifier to the IM clients that are logged in by the named session participants.

9. An IM client according to claim 7, wherein sending (78) the second piece of group communication information to the IM clients of the named session participants other than the user, comprises:
sending (42) the second piece of group communication information including the name identifier to the IM group server for the IM group server to send the second piece of group communication information to the IM clients of the session participants other than the user based on the name identifier in the second piece of group communication information.

10. An IM client according to any one of claims 6 to 9, the named session participants consisting of a subset less than all of users of an IM group to which the user belongs.

11. One or more computer-readable media (1403) storing executable instructions that, when executed by one or more processors (1401), cause the one or more processors to perform acts comprising:
receiving (11) group communication information at an instant messenger (IM) client from a user that initiated a named session, wherein the group communication information comprises a name identifier and IM group user identifiers for named session participants listed after the name identifier; and
in response to identifying (12) that the group communication information includes a predefined name identifier, sending (12) the group communication information to IM clients which are logged in with IM group user identifiers listed after the name identifier; wherein the IM group user identifiers are- a subset less than all of user identifiers associated with an IM group to which a user of the subset of users of the IM client belongs.

12. One or more computer-readable media (1403) according to claim 11, wherein sending the group communication information comprises:
based on address information of group users of a group to which a user of the IM client belongs, sending (24) the group communication information to the IM clients which are logged in with the IM group user identifiers listed after the name identifier.

13. One or more computer-readable media (1403) according to claim 11 or claim 12, the acts further comprising:
receiving (63) a response of the group communication information from a user of the IM client for the group communication information; and
sending (64) the response to IM clients of named session participants other than the user, wherein the named session participants include a user who sends the group communication information and a user indicated by a user identifier listed after the name identifier of the group communication information.

14. One or more computer-readable media (1403) according to any one of claims 11 to 13, the IM group user identifiers consisting of a subset less than all of user identifiers associated with an IM group to which a user of the IM client belongs.

## Patentansprüche

1. Verfahren zum Senden von Instant-Messenger, IM,-Gruppenkommunikationsinformationen zwischen einem Teilsatz einer Gruppe von IM-Benutzern, wobei das Verfahren umfasst, dass:
ein IM-Benutzer eine mit Namen bezeichnete IM-Sitzung durch Eingeben von Gruppenkommunikationsformationen initiiert, die eine Namenskennung und IM-Gruppenbenutzerkennungen für Teilnehmer der mit Namen bezeichneten Sitzung umfassen, die nach der Namenskennung aufgeführt sind und die den Teilsatz bilden;
ein IM-Client die Gruppenkommunikationsinformationen empfängt (11); und
der IM-Client in Reaktion auf ein Identifizieren, dass die Gruppenkommunikationsinformationen eine vordefinierte Namenskennung umfassen, die Gruppenkommunikationsinformationen an IM-Clients sendet (12), die mit IM-Gruppenbenutzerkennungen angemeldet sind, die in den Gruppenkommunikationsinformationen nach der Namenskennung aufgeführt sind; wobei die IM-Gruppenbenutzerkennungen ein Teilsatz von weniger als allen der Benutzerkennungen sind, die mit einer IM-Gruppe assoziiert sind, zu welcher ein Benutzer des Teilsatzes von Benutzern des IM-Clients gehört.

2. Verfahren nach Anspruch 1, wobei das Senden (12) der Gruppenkommunikationsinformationen an die IM-Clients, die mit den nach der Namenskennung aufgeführten IM-Gruppenbenutzerkennungen angemeldet sind, umfasst:
Senden (24) basierend auf Adressinformationen, die von einem IM-Gruppenserver erhalten werden, bei dem der IM-Client angemeldet ist, von Gruppenbenutzern einer Gruppe, zu welcher ein Benutzer des IM-Clients gehört, der Gruppenkommunikationsinformationen an die IM-Clients, die mit den nach der Namenskennung aufgeführten IM-Gruppenbenutzerkennungen angemeldet sind.

3. Verfahren nach Anspruch 1, wobei das Senden (12) der Gruppenkommunikationsinformationen an die IM-Clients, die mit den nach der Namenskennung aufgeführten IM-Gruppenbenutzerkennungen angemeldet sind, umfasst:
Senden (42) der Gruppenkommunikationsinformationen an einen IM-Gruppenserver, damit der IM-Gruppenserver die Gruppenkommunikationsinformationen basierend auf der Namenskennung in den Gruppenkennungsinformationen an die IM-Clients sendet, die mit den nach der Namenskennung aufgeführten IM-Gruppenbenutzerkennungen angemeldet sind.

4. Verfahren nach einem der vorhergehenden Ansprüche, ferner umfassend, dass:
der IM-Client die Gruppenkommunikationsinformationen hervorgehoben anzeigt (62).

5. Verfahren nach einem der vorhergehenden Ansprüche, ferner umfassend:
Empfangen (63) einer Antwort der Gruppenkommunikationsinformationen von einem Benutzer, der durch eine Benutzerkennung angegeben wird, die nach der Namenskennung der Gruppenkennungsinformationen aufgeführt ist.

6. Instant-Messenger (IM)-Client, umfassend:
einen oder mehrere Prozessoren (1401);
Speicher (1403), der ausführbare Anweisungen speichert, die bei Ausführung durch den einen oder die mehreren Prozessoren (1401) den einen oder die mehreren Prozessoren zum Durchführen von Handlungen veranlassen, die umfassen:
Empfangen (71) eines ersten Elements von Gruppenkommunikationsinformationen, das eine Namenskennung und IM-Gruppenbenutzerkennungen für Teilnehmer einer mit Namen bezeichneten Sitzung umfasst, die nach der Namenskennung aufgeführt sind und die einen Teilsatz von weniger als allen der Benutzerkennungen bilden, die mit einer IM-Gruppe assoziiert sind, zu welcher ein Benutzer des Teilsatzes von Benutzern des IM-Clients gehört;
Identifizieren (72), dass das erste Element von Gruppenkommunikationsinformationen eine vordefinierte Namenskennung umfasst;
Empfangen (75) eines zweiten Elements von Gruppenkommunikationsinformationen, das von einem Benutzer für das erste Element von Gruppenkommunikationsinformationen eingegeben wird; und
Senden (78) des zweiten Elements von Gruppenkommunikationsinformationen an IM-Clients von Teilnehmern einer mit Namen bezeichneten Sitzung in einer IM-Gruppe außer dem Benutzer, wobei die Teilnehmer der mit Namen bezeichneten Sitzung einen Benutzer, der das erste Element von Gruppenkommunikationsinformationen sendet, und einen Benutzer umfassen, der durch eine Benutzerkennung angegeben wird, die nach der Namenskennung des ersten Elements von Gruppenkommunikationsinformationen aufgeführt ist.

7. IM-Client nach Anspruch 6, wobei die Handlungen nach einem hervorgehobenen Anzeigen (73) des ersten Elements von Gruppenkommunikationsinformationen ferner ein Anzeigen (74) einer voreingestellten Antwortsteuerung umfassen, wobei
das Empfangen des zweiten Elements von Gruppenkommunikationsinformationen umfasst:
Empfangen (75) des zweiten Elements von Gruppenkommunikationsinformationen, das vom Benutzer nach Auslösen der Antwortsteuerung eingegeben wird, und
das Senden (78) des zweiten Elements von Gruppenkommunikationsinformationen umfasst:
Einfügen (76) des Namenskennungs-Tags und von Kennungen der Teilnehmer der mit Namen bezeichneten Sitzung außer dem Benutzer in das zweite Element von Gruppenkommunikationsinformationen; und
Senden (78) des zweiten Elements von Gruppenkommunikationsinformationen, das die Namenskennung umfasst, an die IM-Clients, die durch die Teilnehmer der mit Namen bezeichneten Sitzung außer dem Benutzer angemeldet sind.

8. IM-Client nach Anspruch 7, wobei das Senden (78) des zweiten Elements von Gruppenkommunikationsinformationen, das die Namenskennung umfasst, an die IM-Clients, die durch die Teilnehmer der mit Namen bezeichneten Sitzung außer dem Benutzer angemeldet sind, umfasst:
Senden (24) basierend auf Adressinformationen, die von einem IM-Gruppenserver erhalten werden, bei dem der IM-Client angemeldet ist, von Gruppenbenutzern einer Gruppe, zu welcher der Benutzer gehört, der Gruppenkommunikationsinformationen, welche die Namenskennung umfassen, an die IM-Clients, die durch die Teilnehmer der mit Namen bezeichneten Sitzung angemeldet sind.

9. IM-Client nach Anspruch 7, wobei das Senden (78) des zweiten Elements von Gruppenkommunikationsinformationen an die IM-Clients der Teilnehmer der mit Namen bezeichneten Sitzung außer dem Benutzer umfasst:
Senden (42) des zweiten Elements von Gruppenkommunikationsinformationen, welche die Namenskennung umfassen, an den IM-Gruppenserver, damit der IM-Gruppenserver das zweite Element von Gruppenkommunikationsinformationen basierend auf der Namenskennung im zweiten Element von Gruppenkommunikationsinformationen an die IM-Clients der Sitzungsteilnehmer außer dem Benutzer sendet.

10. IM-Client nach einem der Ansprüche 6 bis 9, wobei die Teilnehmer der mit Namen bezeichneten Sitzung aus einem Teilsatz von weniger als allen der Benutzer einer IM-Gruppe bestehen, zu welcher der Benutzer gehört.

11. Ein oder mehrere computerlesbare Medien (1403), die ausführbare Anweisungen speichern, die bei Ausführung durch einen oder mehrere Prozessoren (1401) den einen oder die mehreren Prozessoren zum Durchführen von Handlungen veranlassen, die umfassen:
Empfangen (11) von Gruppenkommunikationsinformationen an einem Instant-Messenger, IM,-Client von einem Benutzer, der eine mit Namen bezeichnete Sitzung initiierte, wobei die Gruppenkommunikationsinformationen eine Namenskennung und IM-Gruppenbenutzerkennungen für Teilnehmer der mit Namen bezeichneten Sitzung umfassen, die nach der Namenskennung aufgeführt sind; und
Senden (12) in Reaktion auf ein Identifizieren (12), dass die Gruppenkommunikationsinformationen eine vordefinierte Namenskennung umfassen, der Gruppenkommunikationsinformationen an IM-Clients, die mit IM-Gruppenbenutzerkennungen angemeldet sind, die nach der Namenskennung aufgeführt sind; wobei die IM-Gruppenbenutzerkennungen ein Teilsatz von weniger als allen der Benutzerkennungen sind, die mit einer IM-Gruppe assoziiert sind, zu welcher ein Benutzer des Teilsatzes von Benutzern des IM-Clients gehört.

12. Ein oder mehrere computerlesbare Medien (1403) nach Anspruch 11, wobei das Senden der Gruppenkommunikationsinformationen umfasst:
Senden (24) basierend auf Adressinformationen von Gruppenbenutzern einer Gruppe, zu welcher ein Benutzer des IM-Clients gehört, der Gruppenkommunikationsinformationen an die IM-Clients, die mit den nach der Namenskennung aufgeführten IM-Gruppenbenutzerkennungen angemeldet sind.

13. Ein oder mehrere computerlesbare Medien (1403) nach Anspruch 11 oder 12, wobei die Handlungen ferner umfassen:
Empfangen (63) einer Antwort der Gruppenkommunikationsinformationen von einem Benutzer des IM-Clients für die Gruppenkommunikationsinformationen; und
Senden (64) der Antwort an IM-Clients von Teilnehmern einer mit Namen bezeichneten Sitzung außer dem Benutzer, wobei die Teilnehmer der mit Namen bezeichneten Sitzung einen Benutzer, der die Gruppenkommunikationsinformationen sendet, und einen Benutzer umfassen, der durch eine Benutzerkennung angegeben wird, die nach der Namenskennung der Gruppenkommunikationsinformationen aufgeführt ist.

14. Ein oder mehrere computerlesbare Medien (1403) nach einem der Ansprüche 11 bis 13, wobei die IM-Gruppenbenutzerkennungen aus einem Teilsatz von weniger als allen der Benutzerkennungen bestehen, die mit einer IM-Gruppe assoziiert sind, zu welcher ein Benutzer des IM-Clients gehört.

## Revendications

1. Procédé de transmission d'informations de communication de groupe de messagerie instantanée (IM) entre un sous-ensemble d'un groupe d'utilisateurs de messagerie instantanée, le procédé comprenant les étapes suivantes :
un utilisateur de messagerie instantanée lance une session nommée de messagerie instantanée en entrant des informations de communication de groupe, comportant un identifiant de nom et des identifiants d'utilisateur de groupe de messagerie instantanée pour des participants à une session nommée listés après l'identifiant de nom et qui forment le sous-ensemble ;
un client de messagerie instantanée reçoit (11) les informations de communication de groupe ; et
en réponse à l'identification que les informations de communication de groupe comportent un identifiant de nom prédéfini, le client de messagerie instantanée envoie (12) les informations de communication de groupe à des clients de messagerie instantanée qui sont connectés avec des identifiants d'utilisateur de groupe de messagerie instantanée listés après l'identifiant de nom dans les informations de communication de groupe ; dans lequel les identifiants d'utilisateur de groupe de messagerie instantanée constituent un sous-ensemble inférieur à tous les identifiants d'utilisateur associés à un groupe de messagerie instantanée auquel un utilisateur du sous-ensemble d'utilisateurs du client de messagerie instantanée appartient.

2. Procédé selon la revendication 1, dans lequel l'envoi (12) des informations de communication de groupe aux clients de messagerie instantanée qui sont connectés avec les identifiants d'utilisateur de groupe de messagerie instantanée listés après l'identifiant de nom consiste :
en se basant sur des informations d'adresse, qui sont obtenues à partir d'un serveur de groupe de messagerie instantanée auquel le client de messagerie instantanée est connecté, d'utilisateurs de groupe d'un groupe auquel un utilisateur du client de messagerie instantanée appartient, à envoyer (24) les informations de communication de groupe aux clients de messagerie instantanée qui sont connectés avec les identifiants d'utilisateur de groupe de messagerie instantanée listés après l'identifiant de nom.

3. Procédé selon la revendication 1, dans lequel l'envoi (12) des informations de communication de groupe aux clients de messagerie instantanée qui sont connectés avec les identifiants d'utilisateur de groupe de messagerie instantanée listés après l'identifiant de nom consiste :
à envoyer (42) les informations de communication de groupe à un serveur de groupe de messagerie instantanée de telle sorte que le serveur de groupe de messagerie instantanée envoie les informations de communication de groupe aux clients de messagerie instantanée qui sont connectés avec les identifiants d'utilisateur de groupe de messagerie instantanée listés après l'identifiant de nom en se basant sur l'identifiant de nom dans les informations de communication de groupe.

4. Procédé selon l'une quelconque des revendications précédentes, comprenant en outre l'étape suivante :
le client de messagerie instantanée affiche (62) bien en vue les informations de communication de groupe.

5. Procédé selon l'une quelconque des revendications précédentes, consistant en outre :
à recevoir (63) une réponse des informations de communication de groupe en provenance d'un utilisateur indiqué par un identifiant d'utilisateur listé après l'identifiant de nom des informations de communication de groupe.

6. Client de messagerie instantanée (IM) comprenant :
un ou plusieurs processeurs (1401) ;
une mémoire (1403) stockant des instructions pouvant être exécutées qui, lorsqu'elles sont exécutées par le ou les processeurs (1401), amènent le ou les processeurs à effectuer des actions consistant :
à recevoir (71) un premier élément d'informations de communication de groupe comportant un identifiant de nom et des identifiants d'utilisateur de groupe de messagerie instantanée pour des participants à une session nommée listés après l'identifiant de nom et qui forment un sous-ensemble inférieur à tous les identifiants d'utilisateur associés à un groupe de messagerie instantanée auquel un utilisateur du sous-ensemble d'utilisateurs du client de messagerie instantanée appartient ;
à identifier (72) que le premier élément d'informations de communication de groupe comprend un identifiant de nom prédéfini ;
à recevoir (75) un second élément d'informations de communication de groupe entré par un utilisateur pour le premier élément d'informations de communication de groupe ; et
à envoyer (78) le second élément d'informations de communication de groupe à des clients de messagerie instantanée de participants d'une session nommée dans un groupe de messagerie instantanée autres que l'utilisateur, dans lequel les participants à une session nommée comprennent un utilisateur qui envoie le premier élément d'informations de communication de groupe, et un utilisateur indiqué par un identifiant d'utilisateur listé après l'identifiant de nom du premier élément d'informations de communication de groupe.

7. Client de messagerie instantanée selon la revendication 6, dans lequel, après l'affichage (73) bien en vue du premier élément d'informations de communication de groupe, les actions consistent en outre à afficher (74) une commande de réponse prédéfinie, dans lequel
la réception du second élément d'informations de communication de groupe consiste : à recevoir (75) le second élément d'informations de communication de groupe entré par l'utilisateur après avoir actionné la commande de réponse, et
l'envoi (78) du second élément d'informations de communication de groupe consiste :
à inclure (76) l'étiquette d'identifiant de nom et des identifiants des participants à une session nommée autres que l'utilisateur dans le second élément d'informations de communication de groupe ; et
à envoyer (78) le second élément d'informations de communication de groupe qui comporte l'identifiant de nom aux clients de messagerie instantanée qui sont connectés, par les participants à une session nommée autres que l'utilisateur.

8. Client de messagerie instantanée selon la revendication 7, dans lequel l'envoi (78) du second élément d'informations de communication de groupe qui comporte l'identifiant de nom aux clients de messagerie instantanée qui sont connectés, par les participants à une session nommée autres que l'utilisateur, consiste :
en se basant sur des informations d'adresse, qui sont obtenues à partir d'un serveur de groupe de messagerie instantanée auquel le client de messagerie instantanée est connecté, d'utilisateurs de groupe d'un groupe auquel l'utilisateur appartient, à envoyer (24) les informations de communication de groupe comprenant l'identifiant de nom aux clients de messagerie instantanée qui sont connectés par les participants à une session nommée.

9. Client de messagerie instantanée selon la revendication 7, dans lequel l'envoi (78) du second élément d'informations de communication de groupe aux clients de messagerie instantanée des participants à une session nommée autres que l'utilisateur, consiste :
à envoyer (42) le second élément d'informations de communication de groupe comportant l'identifiant de nom au serveur de groupe de messagerie instantanée pour que le serveur de groupe de messagerie instantanée envoie le second élément d'informations de communication de groupe aux clients de messagerie instantanée des participants à une session autres que l'utilisateur en se basant sur l'identifiant de nom dans le second élément d'informations de communication de groupe.

10. Client de messagerie instantanée selon l'une quelconque des revendications 6 à 9, les participants à une session nommée se composant d'un sous-ensemble inférieur à tous les utilisateurs d'un groupe de messagerie instantanée auquel l'utilisateur appartient.

11. Support(s) lisible(s) par ordinateur (1403) stockant des instructions pouvant être exécutées qui, lorsqu'elles sont exécutées par un ou plusieurs processeurs (1401), amènent le ou les processeurs à effectuer des actions consistant :
à recevoir (11) des informations de communication de groupe au niveau d'un client de messagerie instantanée (IM) en provenance d'un utilisateur qui a lancé une session nommée, les informations de communication de groupe comportant un identifiant de nom et des identifiants d'utilisateur de groupe de messagerie instantanée pour des participants à une session nommée listés après l'identifiant de nom ; et
en réponse à l'identification (12) que les informations de communication de groupe comportent un identifiant de nom prédéfini, à envoyer (12) les informations de communication de groupe à des clients de messagerie instantanée qui sont connectés avec des identifiants d'utilisateur de groupe de messagerie instantanée listés après le nom d'identifiant ; les identifiants d'utilisateur de groupe de messagerie instantanée constituant un sous-ensemble inférieur à tous les identifiants d'utilisateur associés à un groupe de messagerie instantanée auquel un utilisateur du sous-ensemble d'utilisateurs du client de messagerie instantanée appartient.

12. Support(s) lisible(s) par ordinateur (1403) selon la revendication 11, l'envoi des informations de communication de groupe consistant :
en se basant sur des informations d'adresse d'utilisateurs de groupe d'un groupe auquel un utilisateur du client de messagerie instantanée appartient, à envoyer (24) les informations de communication de groupe aux clients de messagerie instantanée qui sont connectés avec les identifiants d'utilisateur de groupe de messagerie instantanée listés après le nom d'identifiant.

13. Support(s) lisible(s) par ordinateur (1403) selon la revendication 11 ou la revendication 12, les actions consistant en outre :
à recevoir (63) une réponse des informations de communication de groupe en provenance d'un utilisateur du client de messagerie instantanée pour les informations de communication de groupe ; et
à envoyer (64) la réponse à des clients de messagerie instantanée de participants à une session nommée autres que l'utilisateur, les participants à une session nommée comprenant un utilisateur qui envoie les informations de communication de groupe, et un utilisateur indiqué par un identifiant d'utilisateur listé après l'identifiant de nom des informations de communication de groupe.

14. Support(s) lisible(s) par ordinateur (1403) selon l'une quelconque des revendications 11 à 13, les identifiants d'utilisateur de groupe de messagerie instantanée se composant d'un sous-ensemble inférieur à tous les identifiants d'utilisateur associés à un groupe de messagerie instantanée auquel un utilisateur du client de messagerie instantanée appartient.
